# EUROPÄISCHE PATENTANMELDUNG

(11) **EP 1 426 132 A1**
(43) Veröffentlichungstag der Anmeldung: **09.06.2004**
(21) Anmeldenummer: 02406059.2
(22) Anmeldetag: 06.12.2002
(51) Int. Cl.: B23K 11/00, B23K 11/24

(54) **Gitterschweissmaschine**

(71) Anmelder: H.A. SCHLATTER AG, CH-8952 Schlieren Zürich (CH)
(72) Erfinder: Widmer, Robert, 5212 Hausen b.Brugg (CH); Rappold, Dietmar, 8953 Dietikon (CH); Meier, Robert, 8907 Wettswil (CH)
(74) Vertreter: Roshardt, Werner Alfred, Dipl.-Phys.

(57) **Zusammenfassung**

Bei einer Schweissmaschine werden die Schweisselektroden (13.1-13.6) durch mehrere Gleichstromquellen (18.1-18.6) separat versorgt, während die entsprechenden Gegenelektroden (14.1-14.6) leitend miteinander verbunden sind. Dadurch können für alle Elektroden/Gegenelektroden gleich starke Schweissströme erreicht werden, so dass die Einschweisstiefe in der ganzen Breite der Schweissmaschine konstant ist. Ausserdem können die Schweissströme für verschiedene Elektroden/Gegenelektroden individuell gesteuert werden. Trotzdem erlaubt die erfindungsgemässe Schaltung den Aufbau der Schweissmaschine in Portalbauweise. Durch die bewegliche Befestigung der Transformatoren der Gleichstromquellen (18.1-18.6) werden starre Verbindungen von den Transformatoren zu den Schweisselektroden ermöglicht, welche kostengünstiger und einfacher kühlbar sind.

## Beschreibung

### Technisches Gebiet

Die Erfindung betrifft eine Schweissmaschine mit einer ersten Schweisselektrode einer ersten Polarität, einer der ersten Schweisselektrode zugeordneten ersten Gegenelektrode einer zweiten Polarität, einer zweiten Schweisselektrode der ersten Polarität und einer der zweiten Schweisselektrode zugeordneten zweiten Gegenelektrode der zweiten Polarität, wobei die erste Gegenelektrode mit der zweiten Gegenelektrode elektrisch leitend verbunden ist.

### Stand der Technik

Sollen flächig ausgedehnte Objekte, z. B. Gittermatten, Roste, Drahtkörbe, Käfige oder Zäune, verschweisst werden, wird mit Vorteil eine Schweissmaschine in Portalbauweise eingesetzt. Diese weist ein Maschinengestell auf, das ein Maschinenbett und ein fest mit dem Maschinenbett verbundenes Portal umfasst. Das Portal umfasst üblicherweise zwei vertikale, unten fest mit dem Maschinenbett verbundene Ständer und einen diese Ständer miteinander verbindenden Querbalken. Der Schweissvorgang findet in einer Schweissebene zwischen dem Maschinenbett und dem Querbalken statt. Die Schweisselektroden unten auf dem Maschinenbett sowie die Gegenelektroden oberhalb der Schweissebene werden durch eine oder mehrere Gleichstromquellen mit Strom versorgt, wobei die Versorgung durch einen Strombalken unterhalb der Schweissebene auf dem Maschinenbett und einen Strombalken oberhalb der Schweissebene am Portal erfolgt, so dass die Schweisselektroden wie auch die Gegenelektroden jeweils untereinander leitend verbunden sind; die einzelnen Elektroden-/Gegenelektrodenpaare sind also parallel geschaltet.

Dies hat den Nachteil, dass die elektrischen Impedanzen für verschiedene, weiter innen oder weiter aussen in der Maschine angebrachte Schweisselektroden und zugeordnete Gegenelektroden unterschiedlich sind, bewirkt durch die unterschiedlichen Längen der Zuleitungen als auch durch die unterschiedliche Induktivität. Dies führt dazu, dass zwischen verschiedenen einander zugeordneten Schweisselektroden und Gegenelektroden verschieden starke Schweissströme fliessen, was unterschiedliche Einschweisstiefen zur Folge hat. Die Schweissströme können nur als Summenstrom der Quelle bzw. der Quellen gesteuert werden.

### Darstellung der Erfindung

Aufgabe der Erfindung ist es, eine dem eingangs genannten technischen Gebiet zugehörende Schweissmaschine zu schaffen, welche eine konstante Einschweisstiefe über die ganze Breite der Maschine ermöglicht.

Die Lösung der Aufgabe ist durch die Merkmale des Anspruchs 1 definiert. Gemäss der Erfindung werden die erste Schweisselektrode durch eine erste Gleichstromquelle und die zweite Schweisselektrode durch eine zweite Gleichstromquelle versorgt und die erste Schweisselektrode ist von der zweiten Schweisselektrode elektrisch getrennt.

Durch die getrennte Versorgung verschiedener Elektroden werden gleich starke Schweissströme in der ganzen Breite der Schweissmaschine, und damit überall gleiche Einschweisstiefen ermöglicht. Werden die einzelnen Gleichstromquellen unterschiedlich gewählt oder eingestellt, können zudem die Schweissströme verschiedener Elektroden dem zu schweissenden Objekt angepasst werden.

Die Erfindung ist nicht auf Schweissmaschinen in Portalbauweise beschränkt. Die getrennte Versorgung verschiedener Elektroden durch separate Gleichstromquellen führt allgemein bei Schweissmaschinen zu geringeren Einflüssen zwischen verschiedenen Elektroden/Gegenelektroden-Anordnungen und zu einer besseren Steuerbarkeit der Schweissströme.

Mit Vorteil weist die erfindungsgemässe Schweissmaschine aber ein offenes Portal auf, welches eine Schweissebene umschliesst. Die Schweisselektroden sind unterhalb der Schweissebene und die Gegenelektroden oberhalb der Schweissebene angeordnet. Weil die oberen Gegenelektroden leitend miteinander verbunden sind, kann ihre Stromversorgung weiterhin auf einfache Weise entlang des Portals erfolgen, z. B. indem eine Stromschiene entlang des oberen Querbalkens des Portals alle Gegenelektroden leitend kontaktiert. Der Leiter zur Versorgung der Stromschiene wiederum kann entlang der seitlichen Ständer des Portals nach oben geführt werden. Die elektrisch getrennte Versorgung der Schweisselektroden unterhalb der Schweissebene ist ebenfalls auf einfache Weise möglich, indem die Zuleitung von unten angebrachten Gleichstromquellen direkt erfolgen kann, ohne dass die Schweissebene ein Hindernis darstellt.

Die Schweissmaschine kann so ausgebildet sein, dass sie mindestens eine weitere Schweisselektrode umfasst, dass jede der ersten, zweiten und weiteren Schweisselektroden je durch eine separate Gleichstromquelle mit Strom versorgt wird und dass jede Schweisselektrode von jeder anderen Schweisselektrode elektrisch getrennt ist. Dies bietet den Vorteil, dass die Stromstärke jeder Schweisselektrode einzeln gesteuert oder geregelt werden kann und dass eine Beeinflussung durch unterschiedliche ohmsche oder induktive Impedanzen minimiert wird.

Wahlweise kann die Schweissmaschine so ausgebildet sein, dass eine erste Anzahl Schweisselektroden, die von der ersten Gleichstromquelle versorgt werden, unterschiedlich ist von einer zweiten Anzahl Schweisselektroden, die von der zweiten Gleichstromquelle versorgt werden. Dieser Aufbau bietet vor allem dann Vorteile, wenn verschiedene Gruppen von Elektroden zur Schweissung verschieden ausgebildeter Schweissstellen eingesetzt werden und dadurch die Schweissströme der verschiedenen Gruppen unterschiedlich gewählt werden müssen. Vorteilhaft ist dieser Aufbau auch dann, wenn verschieden dimensionierte Gleichstromquellen vorgesehen sind, welche jeweils - je nach Leistung - eine unterschiedliche Anzahl Schweisselektroden versorgen.

Mit Vorteil umfasst die Schweissmaschine Mittel, insbesondere Thyristor-Schalter, zur individuellen Einstellung einer Stromstärke mindestens der ersten Gleichstromquelle. Solche Mittel erlauben die schnelle Anpassung der Maschine auf unterschiedliche Aufgaben oder die Kompensation von Einflüssen der unterschiedlichen Impedanzen: Es kann z. B. ausreichend sein, wenn nur die Stromstärke einer einzigen Gleichstromquelle, z. B. jener in der Mitte der Maschine, gesteuert werden kann, um die Störeinflüsse zu kompensieren. Vorzugsweise können aber die Stromstärken aller Gleichstromquellen individuell geregelt werden, um eine maximale Flexibilität der Schweissmaschine bei einer möglichst gleichmässigen Stromverteilung zu erreichen. Schliesslich ist es möglich, die Stromstärken während des Schweissvorgangs zu regeln.

Mit Vorteil wird ein Thyristor-Schalter zur Steuerung der Stromstärke eingesetzt, wobei der Arbeitsbereich der Schweissmaschine durch die Belastbarkeit der Dioden bestimmt wird.

Die Schweissmaschine kann insbesondere zur Herstellung von Drahtgittern durch Verschweissen von Längsdrähten und Querdrähten eingesetzt werden. Werden an verschiedene Gleichstromquellen angeschlossene Schweisselektroden und/oder Gegenelektroden unterschiedlich ausgeformt, ist es möglich, gleichzeitig Längsdrähte mit unterschiedlichen Durchmessern zu verarbeiten.

Der Einsatz unterschiedlich ausgeformter Schweisselektroden und/oder Gegenelektroden bedingt in der Regel verschiedene Stromstärken für den Schweissvorgang: Um eine bestimmte Einschweisstiefe zu erreichen, muss die Stromstärke bei einer Elektrode, die mehr Drähte zu verschweissen hat als die übrigen, generell höher gewählt werden. Diese verschiedenen Stromstärken werden durch den erfindungsgemässen Aufbau der Schweissmaschine ermöglicht. Können sämtliche Gleichstromquellen individuell gesteuert werden, kann die Maschine flexibel und einfach an eine Vielzahl von zu verschweissenden Objekten angepasst werden.

Mit Vorteil umfasst jede Gleichstromquelle genau einen Einphasen-Gleichrichter, indem dadurch der kostengünstigste Aufbau ermöglicht wird. Bei einem dreiphasigen Netzanschluss werden verschiedene Gleichstromquellen durch die verschiedenen Phasen gespeist.

Mit Vorteil sind die Gleichstromquellen als Mittelfrequenzquellen ausgeführt. Bei Mittelfrequenzquellen wird der Schweissstrom erst auf eine Frequenz von z. B. 1000 Hz umgewandelt und anschliessend auf der Sekundärseite gleichgerichtet. Dies führt zu einem Gleichstrom mit geringer Oberwelligkeit und dadurch zum Verschwinden des Einflusses der Phasengrenzen. Die Einstellbarkeit der Gleichstromquellen der erfindungsgemässen Schweissmaschine wird also noch weiter verbessert.

Mit Vorteil umfasst die in der erfindungsgemässen Schweissmaschine eingesetzte Gleichstromquelle einen Transformator, welcher bezüglich dem Maschinengestell, und insbesondere dem Portal, beweglich befestigt ist.

Bei Gleichstrom-Schweissmaschinen treten aufgrund der hohen Stromstärken grosse elektrische und magnetische Kräfte auf, welche besonders die in den Gleichstromquellen eingesetzten Transformatoren, insbesondere deren Sekundärwicklungen, betreffen. Bei herkömmlichen Schweissmaschinen waren diese Transformatoren fest auf einem entsprechenden Tisch angeordnet, wobei der Tisch mit dem Maschinengestell verbunden war. Dadurch wirkten grosse Kräfte auf die elektrischen Verbindungen zwischen den Transformatoren und den Schweisselektroden. Diese Verbindungen mussten deshalb flexibel, also z. B. als Kabel oder Band ausgebildet werden. Eine solche flexible Verbindung konnte zwar die Kräfte, zumindest zum Teil, durch Formänderungen ausgleichen; sie war aber einerseits teuer und andererseits nur sehr schwer kühlbar. Dies war wegen der durch die hohen Stromstärken bewirkten erheblichen Erwärmung der Verbindungen ein grosser Nachteil.

Durch die bezüglich dem Maschinengestell bewegliche Befestigung des Transformators werden diese Nachteile vermieden. Dadurch, dass der Transformator selber die auf ihn wirkenden Kräfte kompensieren kann, werden Kräfte auf die Verbindung zwischen dem Transformator und den Schweisselektroden wesentlich vermindert.

Es können nun insbesondere starre Verbindungsmittel zwischen dem Transformator und der mindestens einen Schweisselektrode vorgesehen werden, wobei sich der Transformator zusammen mit den starren Verbindungsmitteln bewegen kann. Eine starre Verbindung ist kostengünstiger als ein flexibles Band oder Kabel derselben Leitfähigkeit, sie ist zudem auf einfache Art und Weise kühlbar.

Mit Vorteil sind die starren Verbindungsmittel als schienenförmiger Strombalken ausgebildet. Ein solcher kann die elektrischen und magnetischen Kräfte, welche er erfährt, auf den Transformator übertragen, welcher sie durch seine Bewegung kompensiert. Er ist zudem kostengünstig herzustellen und kann sehr hohe Stromstärken mit geringer Erwärmung transportieren.

Soll der schienenförmige Strombalken dennoch gekühlt werden, umfasst die Schweissmaschine mit Vorteil Mittel zur Kühlung des Strombalkens, insbesondere einen Kühlkanal für den Durchfluss eines Kühlmittels.

Vorzugsweise ist der Transformator über einen beweglichen Wippmechanismus auf dem Maschinengestell angeordnet. Eine derartige Anordnung kommt mit einer geringen Zahl mechanischer Bauteile aus und ist deshalb kostengünstig und wartungsarm. Durch eine Wahl einer oder mehrerer Wippachsen können zudem die Bewegungsmöglichkeiten des Transformators den zu erwartenden Kräften angepasst werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung der Schaltung einer herkömmlichen Schweissmaschine;
- Fig. 2: eine schematische Darstellung der Einschweisstiefe in Abhängigkeit von der Schweissposition bei einer herkömmlichen Schweissmaschine;
- Fig. 3: eine schematische Darstellung der Schaltung der erfindungsgemässen Schweissmaschine;
- Fig. 4: ein beweglich befestigter Transformator der erfindungsgemässen Schweissmaschine.

Grundsätzlich sind in den Figuren gleiche Teile mit gleichen Bezugszeichen versehen.

### Wege zur Ausführung der Erfindung

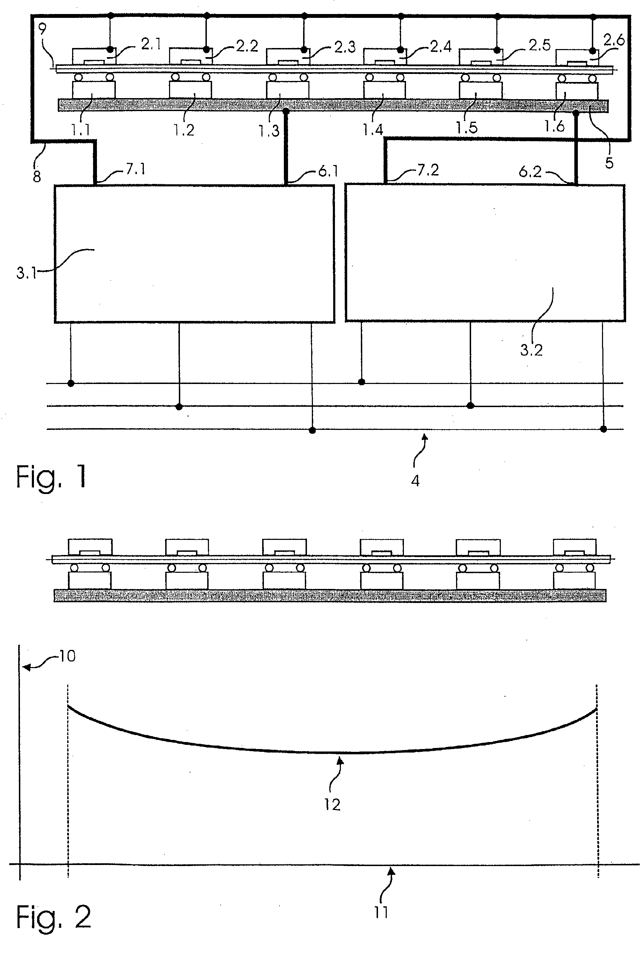

Figur 1 zeigt eine schematische Darstellung der Schaltung einer herkömmlichen Schweissmaschine in Portalbauweise. Die sechs Schweisselektroden 1.1-1.6 und die sechs Gegenelektroden 2.1-2.6 werden durch 2 Gleichstromquellen 3.1, 3.2 mit Strom versorgt, welche durch einen dreiphasigen Netzanschluss 4 gespeist werden. Die Gleichstromquellen 3.1, 3.2 sind nicht näher dargestellt, umfassen jedoch typischerweise insbesondere Transformatoren und Gleichrichter. Die sechs Schweisselektroden 1.1-1.6 unterhalb der Schweissebene 9 sind direkt mit einer durchgehenden Stromschiene 5 leitend verbunden, welche wiederum an den Minuspolen 6.1, 6.2 der Gleichstromquellen 3.1, 3.2 angeschlossen ist. Die Pluspole 7.1, 7.2 der Gleichstromquellen sind durch einen durchgehenden Leiter 8 dem Portal entlang über die Schweissebene 9 hinauf geführt und speisen dort die Gegenelektroden 2.1-2.6.

Die Gleichstromquellen 3.1, 3.2 als auch sämtliche Schweisselektroden 1.1-1.6 bzw. Gegenelektroden 2.1-2.6 sind also jeweils parallel geschaltet.

Figur 2 zeigt eine schematische Darstellung der Einschweisstiefe 10 in Abhängigkeit von der Schweissposition 11 bei der in der Figur 1 dargestellten herkömmlichen Schweissmaschine. Die Kurve 12 gibt wieder, dass die Einschweisstiefe in den Randbereichen des Portals maximal ist und in der Mitte des Portals ein Minimum aufweist. Dies ist dadurch bedingt, dass die aussenliegenden Stromkreise näher bei den Gleichstromquellen 3.1, 3.2 liegen als die in der Mitte des Portals liegenden Stromkreise. Die elektrischen Impedanzen sind deshalb durch die unterschiedlichen Leiterlängen und die unterschiedlich grossen "Fensterflächen" der Stromkreise sowohl ohmsch als auch induktiv unterschiedlich gross. Das führt dazu, dass die Schweissströme in der Mitte der Maschine deutlich geringer sind als in den Randbereichen. Je breiter das Portal ausgebildet ist, desto grösser werden die Unterschiede und desto schwieriger oder sogar unmöglich wird es, über die ganze Maschinenbreite einen zuverlässigen Schweissvorgang zu gewährleisten. Ab einer gewissen Breite der Maschine werden die Schweissungen im mittleren Bereich der Maschine mangels ausreichender Stromstärke nämlich nur noch ungenügend ausgeführt, während im Randbereich das Material an der Schweissstelle wegen zu hoher Stromstärke bereits wegspritzt.

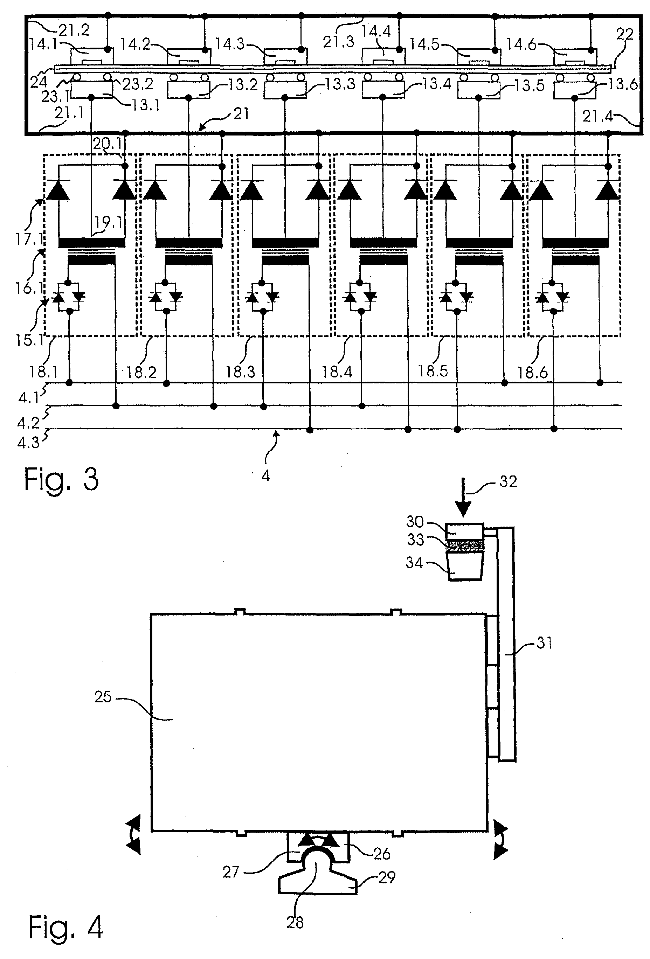

Figur 3 zeigt eine schematische Darstellung der Schaltung der erfindungsgemässen Schweissmaschine in Portalbauweise. Jede der sechs Schweisselektroden 13.1-13.6 wird einzeln durch eine der sechs Gleichstromquellen 18.1-18.6 mit Strom versorgt. Diese Gleichstromquellen 18.1-18.6 sind alle gleich aufgebaut; der Übersichtlichkeit halber wird im Folgenden die Gleichstromquelle 18.1 beschrieben.

Die Gleichstromquelle 18.1 umfasst an ihrem Eingang eine Thyristor-Schaltung 15.1 zur Steuerung des Primärstroms des Transformators 16.1. Die Thyristor-Schaltung ist mittels (nicht dargestellter) Steuerleitungen z. B. mit einer (nicht dargestellten) zentralen Steuerungseinheit verbunden. Jede Thyristor-Schaltung ist von Takt zu Takt anders regelbar. Die Gleichstromquelle 18.1 umfasst weiter einen Transformator 16.1, eine daran anschliessende Gleichrichtereinheit 17.1 und weist schliesslich einen Minus-Ausgang 19.1 und einen Plus-Ausgang 20.1 auf.

Die Gleichstromquellen 18.1-18.6 können, wie aus dem Stand der Technik bekannt, zur Optimierung viele zusätzliche Bauteile und Schaltkreise aufweisen. Besonders vorteilhaft ist aber der Einsatz von Mittelfrequenzquellen, bei welchen der Schweissstrom vor der Transformierung erst auf eine Frequenz von z. B. 1000 Hz umgewandelt und anschliessend auf der Sekundärseite gleichgerichtet wird.

Jede der Einphasen-Gleichstromquellen 18.1-18.6 wird durch eine der Phasen eines dreiphasigen Netzanschlusses 4 gespeist, wobei jeweils für zwei Gleichstromquellen 18.1 und 18.2 bzw. 18.3 und 18.4 bzw. 18.5 und 18.6 dieselbe Phase (Leiter 4.1 und 4.2 bzw. 4.2 und 4.3 bzw. 4.3 und 4.1) verwendet wird.

Die Minus-Ausgänge 19.1, ... sind mit jeweils einer Schweisselektrode 13.1-13.6 unterhalb der Schweissebene 22 direkt leitend verbunden. Der Stromfluss durch jede Schweisselektrode 13.1-13.6 kann also durch Steuerung der Thyristor-Schaltung 15.1, ... der jeweiligen Gleichstromquelle 18.1-18.6 individuell eingestellt werden. Die Plus-Ausgänge 20.1, ... werden durch einen Abschnitt 21.1 des Leiters 21 direkt miteinander verbunden. Der Leiter 21 ist beidseitig entlang des Portals über die Schweissebene 22 hinauf geführt und kontaktiert dort die Gegenelektroden 14.1-14.6.

Der Leiter 21 ist mit Vorteil in seinen Abschnitten 21.1 und 21. 3 unterhalb und oberhalb der Schweissebene 22 als starrer Strombalken ausgeführt.

Die dargestellte erfindungsgemässe Schweissmaschine eignet sich insbesondere zum Schweissen von Gittermatten. Dazu werden Längsdrähte 23.1, 23.2, ... in der Portalebene mit Querdrähten 24 verschweisst, indem die Drähte an ihren Kreuzungspunkten auf der Unterseite durch eine Schweisselektrode 13.1-13.6 und auf der Oberseite durch eine Gegenelektrode 14.1-14.6 kontaktiert werden. Mittels des zwischen den Elektroden fliessenden Stroms wird sodann eine Schweissverbindung zwischen einem Längsdraht 23.1, 23.2, ... und dem Querdraht 24 hergestellt. Die dargestellte Schweissmaschine kann mit ihren breiten Schweisselektroden 13.1-13.6 und den U-förmigen Gegenelektroden 14.1-14.6, welche je zwei Unterelektroden umfassen, gleichzeitig 12 Schweissverbindungen herstellen.

Es versteht sich von selbst, dass eine erfindungsgemässe Schweissmaschine mehr (oder auch weniger) als sechs parallele Elektroden/Gegenelektrodenpaare aufweisen kann. Die Polarität kann umgekehrt zur dargestellten Polarität gewählt werden und es können an verschiedenen Gleichstromquellen auch verschiedenartige Elektroden verwendet werden, z. B. wenn gleichzeitig Längsdrähte unterschiedlichen Durchmessers angeschweisst werden sollen. Durch die für jede Gleichstromquelle und damit für jede Elektrodenart individuell mögliche Einstellung des Stromflusses kann die Einschweisstiefe kontrolliert und der herzustellenden Verbindung angepasst werden.

Figur 4 zeigt einen beweglich befestigten Transformator einer erfindungsgemässen Schweissmaschine in einem vertikalen Querschnitt senkrecht zur Portalfläche. Der Transformator 25 ist in einem Gehäuse angeordnet, welches auf seiner Unterseite einen Lagerklotz 26 mit einer Ausnehmung 27 aufweist. Der Lagerklotz 26 erstreckt sich über die ganze Tiefe des Transformators, die Ausnehmung 27 hat einen halbkreisförmigen Querschnitt und ist also als längliche Rinne ausgebildet, welche sich über die ganze Länge des Lagerklotzes 26 zieht. Mit der Ausnehmung 27 wirkt ein Profil 28 einer Auflage 29 zusammen, welches einen sektorförmigen Querschnitt aufweist, wobei der Sektorwinkel grösser ist als 180°. Die Auflage 29 ist z. B. entweder am Maschinengestell oder auf dem Boden abgestützt bzw. befestigt.

Der Transformator 25 ist durch eine Stromschiene 31 mit einer unteren Elektrode 30 starr verbunden. Die Elektrode 30 ist mittels eines Elektrodenhalters auf einem unteren Tragbalken 34 befestigt, wobei die Elektrode 30 vom Tragbalken 34 durch eine Isolation 33 elektrisch isoliert ist. Die elektromagnetischen Kräfte und die Kräfte der Schweisspressen 32 wirken beim Schweissvorgang über die unteren Elektroden und die Elektrodenhalter auf den Tragbalken 34, so dass sich dieser durchbiegt. Aufgrund der starren Verbindung durch die Stromschiene 31 macht der Transformator 25 diese Bewegung mit, indem er dank der Ausnehmung 27 und dem damit zusammenwirkenden Profil 28 eine Wippbewegung ausführt. Dadurch wird die Einwirkung der Kräfte auf die in Kunststoff vergossene Sekundärwicklung des Transformators 25 vermieden.

Die Speisung der Primärwicklung des Transformators 25 vom (nicht dargestellten) Netzanschluss erfolgt über ein (nicht dargestelltes) flexibles Kabel oder Band, welches die Bewegung des Transformators ebenfalls mitmachen kann.

Die Stromschiene 31 zur Versorgung der unteren Elektrode 30 kann mit einem Kühlmantel oder einem integrierten Kühlkanal versehen sein, durch welchen ein Kühlmittel geleitet wird. Wahlweise, je nach Wärmeentwicklung, kann die Stromschiene 31 bestimmte Strukturen, z. B. Löcher oder Kühlrippen, zur Kühlung aufweisen. Weiter wird die untere Elektrode 30 bzw. der Elektrodenhalter ebenfalls gekühlt, vorzugsweise durch dasselbe Kühlsystem. Dazu dient die Kühlflüssigkeit nach dem Durchgang durch die Stromschiene 31 auch zur Kühlung der Elektrodenhalter und damit der Elektrode 30. Das Kühlsystem für die Stromschiene 31 und die Elektrode 30 ist mit Vorteil getrennt vom Kühlsystem des Transformators 25.

Die bewegliche Befestigung des Transformators auf der Auflage 29 kann auf andere Art und Weise ausgeführt sein, insbesondere indem ein Gelenkmechanismus mit einer grösseren Anzahl Freiheitsgrade eingesetzt wird, z. B. ein Kugelgelenk. Dieses erlaubt neben der Wippbewegung um die Achse parallel zum unteren Tragbalken 34 auch Wippbewegungen um eine horizontale Achse senkrecht zum unteren Tragbalken 34, welche z. B. Kräfte, die durch eine Verbiegung des unteren Tragbalkens 34 auftreten, ausgleichen kann. Damit die Reaktion auf die auf den Transformator 25 ausgeübten Kräfte nicht allein vom Gewicht des Transformators und der Anordnung und Form der beweglichen Befestigung abhängig ist und damit der Transformator 25 nicht allein über die Stromschiene 31 gehalten werden muss, können Druckfedern zwischen der Unterseite des Transformators und einer Auflage vorgesehen werden.

Es sind ausserdem auch andere als Wippbewegungen zur Kompensation von externen Kräften möglich, z. B. indem der Transformator längs einer geraden oder gebogenen Schiene verschoben werden kann oder indem der Transformator drehbar gelagert ist.

Zusammenfassend ist festzustellen, dass die erfindungsgemässe Schweissmaschine eine konstante Einschweisstiefe über die ganze Breite der Maschine ermöglicht.

## Patentansprüche

1. Schweissmaschine mit einer ersten Schweisselektrode einer ersten Polarität, einer der ersten Schweisselektrode zugeordneten ersten Gegenelektrode einer zweiten Polarität, einer zweiten Schweisselektrode der ersten Polarität und einer der zweiten Schweisselektrode zugeordneten zweiten Gegenelektrode der zweiten Polarität, wobei die erste Gegenelektrode mit der zweiten Gegenelektrode elektrisch leitend verbunden ist, **dadurch gekennzeichnet, dass** die erste Schweisselektrode durch eine erste Gleichstromquelle und die zweite Schweisselektrode durch eine zweite Gleichstromquelle mit Strom versorgt werden und dass die erste Schweisselektrode von der zweiten Schweisselektrode elektrisch getrennt ist.

2. Schweissmaschine nach Anspruch 1, **dadurch gekennzeichnet, dass** sie ein offenes Portal aufweist, welches eine Schweissebene umschliesst und dass die Schweisselektroden unterhalb der Schweissebene und die Gegenelektroden oberhalb der Schweissebene angeordnet sind.

3. Schweissmaschine nach Anspruch 1 oder 2, **dadurch gekennzeichnet, dass** sie mindestens eine weitere Schweisselektrode umfasst, dass jede der ersten, zweiten und weiteren Schweisselektroden je durch eine separate Gleichstromquelle mit Strom versorgt wird und dass jede Schweisselektrode von jeder anderen Schweisselektrode elektrisch getrennt ist.

4. Schweissmaschine nach Anspruch 1 oder 2, **dadurch gekennzeichnet, dass** eine erste Anzahl Schweisselektroden, die von der ersten Gleichstromquelle versorgt werden, unterschiedlich ist von einer zweiten Anzahl Schweisselektroden, die von der zweiten Gleichstromquelle versorgt werden.

5. Schweissmaschine nach einem der Ansprüche 1-4, **dadurch gekennzeichnet, dass** sie Mittel, insbesondere Thyristor-Schalter, zur individuellen Einstellung einer Stromstärke mindestens der ersten Gleichstromquelle umfasst.

6. Schweissmaschine nach einem der Ansprüche 1-5 zur Herstellung von Drahtgittern durch Verschweissen von Längsdrähten mit Querdrähten, **dadurch gekennzeichnet, dass** an verschiedene Gleichstromquellen angeschlossene Schweisselektroden und/oder Gegenelektroden unterschiedlich ausgeformt sind, so dass gleichzeitig Längsdrähte mit unterschiedlichen Durchmessern verarbeitet werden können.

7. Schweissmaschine nach einem der Ansprüche 1-6, **dadurch gekennzeichnet, dass** jede Gleichstromquelle genau einen Einphasen-Gleichrichter umfasst.

8. Schweissmaschine nach einem der Ansprüche 1-7, **dadurch gekennzeichnet, dass** mindestens die erste Gleichstromquelle als Mittelfrequenzquelle ausgebildet ist.

9. Schweissmaschine, insbesondere nach einem der Ansprüche 1-8, mit einer Gleichstromquelle zur Versorgung mindestens einer Schweisselektrode mit Strom, wobei die Gleichstromquelle einen Transformator umfasst, **dadurch gekennzeichnet, dass** der Transformator bezüglich einem Maschinengestell, und insbesondere einem Portal, beweglich befestigt ist.

10. Schweissmaschine nach Anspruch 9, **dadurch gekennzeichnet, dass** sie starre Verbindungsmittel zwischen dem Transformator und der mindestens einen Schweisselektrode aufweist und dass der Transformator zusammen mit den starren Verbindungsmitteln bezüglich dem Maschinengestell bewegbar ist.

11. Schweissmaschine nach Anspruch 10, **dadurch gekennzeichnet, dass** die starren Verbindungsmittel als schienenförmiger Strombalken ausgebildet sind.

12. Schweissmaschine nach Anspruch 11, **dadurch gekennzeichnet, dass** sie Mittel zur Kühlung des schienenförmigen Strombalkens, insbesondere einen Kühlkanal für den Durchfluss eines Kühlmittels, umfasst.

13. Schweissmaschine nach einem der Ansprüche 9-12, **dadurch gekennzeichnet, dass** der Transformator über einen beweglichen Wippmechanismus auf dem Maschinengestell angeordnet ist.
